# EUROPÄISCHE PATENTSCHRIFT

(11) **EP 1 779 205 B1**
(45) Veröffentlichungstag und Bekanntmachung des Hinweises auf die Patenterteilung: **19.03.2008**
(21) Anmeldenummer: 05754251.6
(22) Anmeldetag: 28.06.2005
(51) Int. Cl.: G05B 19/042

(54) **VERFAHREN ZUM BETREIBEN EINES FELDGERÄTS DER AUTOMATISIERUNGSTECHNIK**
METHOD FOR OPERATING AN AUTOMATION ENGINEERING FIELD DEVICE
Procédé pour faire fonctionner un appareil de terrain dans le domaine de l'automatisation

(30) Priorität: 17.08.2004 DE 102004039886
(43) Veröffentlichungstag der Anmeldung: 02.05.2007
(73) Patentinhaber: Endress+Hauser Flowtec AG, CH-4153 Reinach (CH)
(72) Erfinder: BORST, Walter, 65626 Fachingen (DE); CHOMIK, Alain, F-68840 Pulversheim (FR); COLUCCI, Marco, 79541 Lörrach (DE)
(74) Vertreter: Andres, Angelika Maria
(86) Internationale Anmeldenummer: PCT/EP2005/053047
(87) Internationale Veröffentlichungsnummer: WO 2006/018345

(56) Entgegenhaltungen:
- EP-A- 1 233 315
- SIEMENS AG: "EN 50 170 Vol 2, Das Arbeiten mit PROFIBUS-DP GSD-Dateien , Version 1.1" 23. August 1999 (1999-08-23), , XP002346442 das ganze Dokument

## Beschreibung

Die Erfindung betrifft ein Verfahren zum Betreiben eines Feldgerätes der Automatisierungstechnik gemäß dem Oberbegriff des Anspruchs 1.

In der Automatisierungstechnik werden vielfach Feldgeräte eingesetzt, die zur Erfassung und/oder Beeinflussung von Prozessvariablen dienen. Beispiele für derartige Feldgeräte sind Füllstandsmessgeräte, Massedurchflussmessgeräte, Druck- und Temperaturmessgeräte etc., die als Sensoren die entsprechenden Prozessvariablen Füllstand, Durchfluss, Druck bzw. Temperatur erfassen.

Zur Beeinflussung von Prozessvariablen dienen Aktoren, die z. B. als Ventile den Durchfluss einer Flüssigkeit in einem Rohrleitungsabschnitt oder als Pumpen den Füllstand in einem Behälter ändern können.

Als Feldgeräte werden im Prinzip alle Geräte bezeichnet, die prozessnah eingesetzt werden und die prozessrelevante Informationen liefern oder verarbeiten.

Eine Vielzahl solcher Feldgeräte wird von der Firma Endress+Hauser hergestellt und vertrieben.

In der Regel sind Feldgeräte in modernen Industrieanlagen über Bussysteme (Profibus, Foundation Fieldbus, etc.) mit übergeordneten Einheiten (Leitsystemen oder Steuereinheiten) verbunden. Diese übergeordneten Einheiten dienen unter anderem zur Prozesssteuerung, Prozessvisualisierung, Prozessüberwachung sowie zur Inbetriebnahme der Feldgeräte.

Bekannte Anwendungen von Bussystemen sind alle Anlagen und Fertigungseinrichtungen, bei denen bisher analoge Signale zur Messwertübertragung verwendet wurden. Dies betrifft eine Vielzahl von Branchen wie Chemischen Industrie, Petrochemie, Lebensmittel, Fertigungstechnik etc.. Die Größe der Systeme reicht von Kleinstanlagen mit ca. 10 Sensoren und Aktoren bis zu Großanlagen mit mehreren Hundert Sensoren und Aktoren.

Vielfach sind bei solchen Anwendungen auch ältere Feldgeräte im Einsatz, die um einen sicheren Prozessablauf zu gewährleisten, in regelmäßigen Abständen gewartet und überprüft werden müssen. Häufig sind Feldgeräte über Jahre im Einsatz. Manche Feldgeräte werden auch nach einer bestimmten Betriebsstundenzahl sicherheitshalber gegen neue Feldgeräte ausgetauscht, um einem Geräteausfall vorzubeugen. Bekanntlich steigt die Ausfallwahrscheinlichkeit von elektronischen Geräten mit wachsender Betriebsdauer.

In der Regel versucht man die Feldgeräte gegen baugleiche Geräte auszutauschen. Diese lassen sich am einfachsten in eine laufende Anwendung integrieren.

Die Gerätehersteller entwickeln jedoch ihre Produkte laufend weiter und nehmen deshalb ältere Modelle nach einer gewissen Zeit vom Markt.

Es ist nicht auszuschließen, dass für einen geplanten Austausch baugleiche Geräte nicht mehr erhältlich sind. Der Anwender hat somit nur zwei Alternativen, entweder ein Nachfolgermodell oder ein Gerät eines anderen Herstellers einzusetzen.

In der Regel entscheidet er sich für ein Nachfolgemodell.

Ein Problem das sich beim Austausch älterer Feldgeräte gegen Nachfolgegeräte ergibt, besteht darin, dass die neuen Geräte in den Anwendung, d. h. den Automatisierungsprozess, aufwendig integriert werden müssen.

Viele Bussysteme sind nämlich so beschaffen, dass ein neues Gerät erst der Steuerung bekannt gemacht werden muss, bevor es in der Automatisierungseinrichtung in Betrieb genommen werden kann.

Die Integration von baugleichen Feldgeräten ist relativ einfach, da nur geringe oder gar keine Einstellungen am Gerät bzw. an der Steuerung

vorgenommen werden müssen.

Für die Integration anderer Feldgeräte muss die Steuerung angehalten werden und die Konfiguration der Steuerung so geändert werden, dass das neue Gerät von der Steuerung korrekt erkannt wird. Zu diesem Zweck muss mindestens ein Teilprozess einer Anlage angehalten werden. Dies ist anwenderseitig sehr unerwünscht. Weiterhin kann die Konfiguration einer Steuerung nur von einem Spezialisten und nicht vom normalen Bedienpersonal vorgenommen werden.

Mit derartigen Maßnahmen sind teilweise erhebliche Kosten für den Anwender verbunden.

Aufgabe der Erfindung ist es deshalb, ein Verfahren zum Betreiben eines Feldgerätes der Automatisierungstechnik anzugeben, das die oben genannten Nachteile nicht aufweist, das insbesondere ein einfacher Gerätetausch bei laufendem Betrieb ermöglicht ohne, dass ein Anlagenstillstand notwendig ist.

Gelöst wird diese Aufgabe durch das im Anspruch 1 angegebene Verfahren.

Vorteilhafte Weiterentwicklung der Erfindung sind in den Unteransprüchen angegeben.

Die wesentliche Idee der Erfindung besteht darin, dass im Feldgerät neben der eigentlichen Kennung noch weitere Alternativ-Kennungen die ähnliche Feldgerätetypen identifizieren, abgespeichert sind und bei einer Anfrage durch eine übergeordnete Einheit, wenn diese die bei einer vorhergehenden Anfrage übermittelte Kennung nicht als gültige Kennung akzeptiert, eine der Alternativkennungen übermittelt wird.

Dadurch wird bei der Initialisierung, wenn die übergeordnete Einheit, die übermittelte Kennung nicht akzeptiert, eine Alternativkennung an die übergeordnete Einheit übermittelt. Für das Steuerprogramm in der übergeordneten Einheit besteht kein Unterschied gegenüber dem Zustand vor dem Gerätetausch. Für die übergeordnete Einheit scheint ein Gerätetausch nicht stattgefunden zu haben. Die übergeordnete Einheit "sieht" weiterhin quasi das alte Feldgerät. Somit sind keinerlei Änderungen an der übergeordneten Einheit notwendig. Ein Verfahren zur Konfiguration eines Feldgerätes zeigt EP 1 233 315 A1.

In vorteilhafter Weise handelt es sich bei dem Bussystem um einen Profibus DP oder um einen Profibus PA.

In der Regel handelt es sich bei der übergeordneten Einheit um eine Steuerung (SPS, die als Master Klasse 1 fungiert).

In einer alternativen Ausgestaltung weist die übergeordnete Einheit dem als Slave fungierenden Feldgerät einem Profibus Ident-Nr. zu.

In vorteilhafter Weise ist eine Änderung der Kennung nur während der Initialisierungsphase der Kommunikation des Feldgerätes möglich.

Nachfolgend ist die Erfindung anhand eines in der Zeichnung dargestellten Ausführungsbeispiels näher erläutert.

Das erfindungsgemäße Verfahren ist besonders für den Gerätetausch bei Feldgeräten der Automatisierungstechnik geeignet.

Es zeigen:

Fig. 1 typisches Feldbussystem mit mehreren Feldgeräten und

einer übergeordneten Einheit;

Fig. 2 schematische Darstellung des erfindungsgemäßen

Verfahrens anhand Zustandsmaschine.

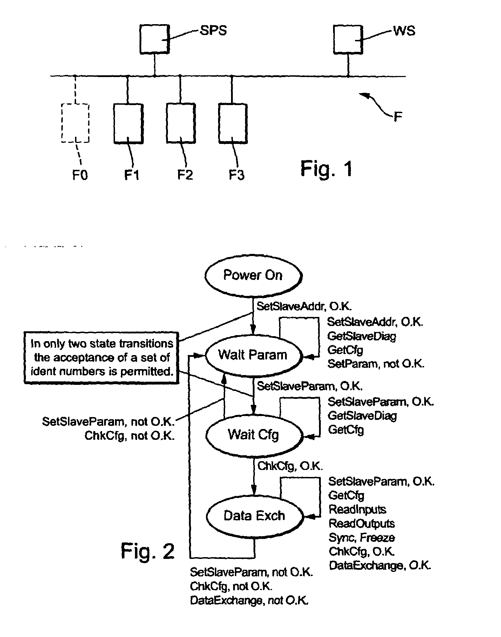

In Fig. 1 ist ein kleines Bussystem F mit drei Feldgeräten F1, F2, F3, einer Steuerung SPS und einer weiteren übergeordneten Einheit WS1 dargestellt. Bei dem Bussystem F handelt es sich um einen Profibus PA oder Profibus DP System.

Als Anwendung ist eine Überfüllsicherung bei einem Flüssigkeitstank denkbar, bei dem ein Feldgerät den Füllstand in einem Behälter misst, ein weiteres Feldgerät als Ventil ausgelegt ist, das den Abfluss aus dem Behälter regelt. Darüber hinaus ist noch ein Grenzstandschalter vorgesehen, der den maximalen Füllstand im Behälter detektiert. Das Steuerprogramm in der Steuerung, die eine speicherprogrammierbare Steuerung SPS oder ein PLC Programable Logic Controller sein kann, regelt den Füllstand in einem Behälter. Die Steuerung SPS ist ein Profibus-Master, die Feldgeräte F1, F2, F3 sind Profibus-Slaves. Die Kommunikation zwischen der Steuerung SPS und den Feldgeräten F1, F2, F3 erfolgt entsprechend den bekannten Profibus-Standards.

In Fig. 2 ist eine Profibus-Zustandsmaschine für das Feldgerät F1 schematisch dargestellt. Nach dem Einschalten der Spannungsversorgung (Zustand Power On) wird das System in den Zustand "Warten auf Parametrierung" (Wait Param) über. Nach erfolgreicher Parametrierung geht das System in den Zustand "Warten auf Konfigurierung" (Wait Cfg) über. Nach erfolgreicher Konfigurierung wird der Zustand Datenaustausch (Data Exch) erreicht. In diesem Zustand können die SPS und die Feldgeräte F1, F2, F3 Daten miteinander austauschen.

Nachfolgend ist das erfindungsgemäße Verfahren näher beschrieben.

Das Feldgerät F1, soll das ursprünglich eingesetzte Feldgerät F0 (in Fig. 1 gestrichelt dargestellt) ersetzen.

Zu diesem Zweck wird die Verbindung des Feldgerätes F0 mit dem Bussystem gelöst und das Feldgerät F1 an das Bussystem angeschlossen und die Spannungsversorgung eingeschaltet. Dies entspricht dem Zustand "Power On" der Zustandsmaschine gemäß Fig. 2. Das Gerät führt einen Selbsttest aus und erwartet eine Parametrierung ("Wait Param"). Über den Dienst GetSlaveDiag fragt der Master, die Steuereinheit SPS,

unter anderem die Kennung (Ident-Nr.) des Feldgerätes F1 ab. Das Feldgerät F1 sendet seine Kennung KF1 an die Steuereinheit. Die Steuereinheit SPS stellt fest, dass die gesendete Kennung KF1 keine gültige Kennung ist. Die SPS akzeptiert nur die Kennung KF0, d. h. die Kennung des ursprünglichen eingesetzten Feldgerätes F0. Die Steuereinheit SPS wiederholt deshalb kontinuierlich diese Anfrage GetSlaveDiag.

Aufgrund dieser sich wiederholenden Anfragen, erkennt das Feldgerät, dass seine Kennung anscheinend von der Steuereinheit nicht akzeptiert wird.

Es übermittelt deshalb nach ein oder mehreren Fehlversuchen eine Alternativ-Kennung AKF1, die der Kennung KF0 des ursprünglich eingesetzten Feldgerätes F0 entspricht, d. h. AKF1=KF0. Diese Kennung wird von der Steuereinheit als gültig akzeptiert und das Feldgerät F1 geht über den Zustand Wait Cfg in den Zustand Data Exch über.

Das in der Steuereinheit SPS ablaufende Steuerprogramm kann nun normal weiterlaufen. Es sind keine Änderungen weder am Feldgerät noch an der Steuereinheit SPS notwendig. Für den Gerätetausch ist kein Fachpersonal notwendig das z. B. für eine Änderung der Systemkonfigurierung der Steuereinheit SPS notwendig wäre.

Die im Feldgerät F1 abgespeicherte Alternativ-Kennung AKF1 entspricht

der Kennung eines ähnlichen Feldgerätetyps, des Feldgerätes F0.

Es können auch mehrere Alternativ-Kennungen im Feldgerät F1 abgespeichert sein.

Bei dem Bussystem kann es sich z. B. um einen Profibus-DP oder einen Profibus-PA handeln. Die Kennung die bei Profibus Ident-Nr. genant wird, wird von der Profibus Nutzerorganisation für die einzelnen Feldgeräte vergeben.

Die Steuereinheit SPS kommuniziert über MSCY_C1 Dienste (Master-Slave Klasse 1 zyklisch) mit dem als Slave fungierenden Feldgerät.

In einer Alternativen Ausgestaltung der Erfindung sendet die Steuereinheit SPS die Kennung KF0, die unterstützt werden soll und das Feldgerät passt sich dieser Kennung an. Dies geschieht wenn die Steuerung SPS keinen GetDiag Dienst zum Aufstarten verwendet, sondern sofort einen SetParam oder SetSlaveAddr Dienst aufruft. In diesen Diensten wird von der Steuerung SPS die gewünschte Kennung mit übertragen. Sofern die Kennung unterstützt wird, stellt sich das Feldgerät darauf ein und bestätigt den Dienst positiv. Eine Anpassung der Kennung des Feldgerätes F1 an die von der Steuerung unterstützte Kennung ist nur während der Initialisierungsphase der Buskommunikation möglich.

Die Änderung der Kennung des Feldgerätes F1 muss natürlich konform mit den entsprechenden Busspezifikationen sein. Insbesondere ist das Verfahren konform mit den Profibus-Spezifikationen.

Das erfindungsgemäße Verfahren eignet sich besonders gut bei einem Gerätetausch von Feldgeräten der Automatisierungstechnik, die über einen Feldbus mit einer übergeordneten Einheit verbunden sind und die in ein Steuerprogramm eingebunden sind.

## Patentansprüche

1. Verfahren zum Betreiben eines Feldgerätes der Automatisierungstechnik das über einen Bussystem mit einer übergeordneten Einheit verbunden ist und das eine Kennung aufweist, die den Typ des Feldgeräts identifiziert, **dadurch gekennzeichnet, dass** neben einer Kennung KF1 mindestens eine Alternativ-Kennung AKF1, die einen ähnlichen Feldgerätetyp identifiziert, im Feldgerät F1 abgespeichert ist und dass diese Alternativ Kennung AKF1 auf Anfrage an die übergeordnete Einheit übermittelt wird, wenn die übergeordnete Einheit, die bei vorhergehenden Anfragen übermittelte Kennung KF1 nicht als gültige Kennung akzeptiert.

2. Verfahren nach Anspruch 1, **dadurch gekennzeichnet, dass** das Feldgerät F1 als Nachfolgegerät zu einem Feldgerät F0 eingesetzt wird, das die Kennung KF0, die als Alternativ-Kennung AKF1 im Feldgerät F1 verwendet wird, besitzt und das Feldgerät F1 ein zum Feldgerät F0 ähnlicher Feldgerätetyp mit im Wesentlichen gleichen Funktionalitäten ist.

3. Verfahren nach einem der vorhergehenden Ansprüche, **dadurch gekennzeichnet, dass** das Bussystem ein Profibus-DP oder ein Profibus-PA ist und die Kennung eine Profibus Ident-Nr. ist.

4. Verfahren nach einem der vorhergehenden Ansprüche, **dadurch gekennzeichnet, dass** die übergeordnete Einheit eine Steuerung SPS ist, die als Master Klasse 1 fungiert und über MSCY_C1 (Master-Slave Klasse 1 Zyklisch) Dienste mit dem als Slave fungierende Feldgerät F1 kommuniziert.

5. Verfahren nach einem der vorhergehenden Ansprüche, **dadurch gekennzeichnet, dass** die übergeordnete Einheit mit dem Dienst SetSlaveAdd oder SetParam dem als Slave fungierende Feldgerät F1 eine Profibus Ident-Nr. anbietet.

6. Verfahren nach einem der vorhergehenden Ansprüche, **dadurch gekennzeichnet, dass** die übergeordnete Einheit mit dem Dienst GetSlaveDiag, das als Slave fungierende Feldgerät auffordert, u. a. seine Ident-Nr. zurückzusenden.

7. Verfahren nach einem der vorhergehenden Ansprüche, **dadurch gekennzeichnet, dass** nur in der Initialisierungsphase der Buskommunikation des Feldgerätes eine automatische Anpassung der Kennung möglich ist.

8. Verfahren nach einem der vorhergehenden Ansprüche, **dadurch gekennzeichnet, dass** eine Änderung der Kennung nur im Zustand "Warten auf Parametrierung" (Wait Param) möglich ist.

9. Verfahren nach einem der vorhergehenden Ansprüche, **dadurch gekennzeichnet, dass** die Änderung der Kennung konform mit den Profibus-Spezifikationen ist.

10. Verfahren zum Austausch von Feldgeräten der Automatisierungstechnik die über einen Feldbus mit einer übergeordneten Einheit verbunden sind, bei dem ein vorhandenes erstes Feldgerät, das in ein Steuerprogramm der übergeordneten Einheit integriert ist, durch ein neues zweites Feldgerät ausgetauscht wird, **dadurch gekennzeichnet, dass** das neue zweite Feldgerät nach dem in den vorhergehenden Ansprüchen beschriebene Verfahren arbeitet.

## Claims

1. A method of operating an automation-engineering field device which is connected via a bus system to a superordinated unit and has an identifier which identifies the type of field device, **characterised in that**, in addition to an identifier KF1, at least one alternative identifier AKF1 which identifies a similar field device type is stored in the field device F1, and **in that** this alternative identifier AKF1 is transmitted, upon request, to the superordinated unit if the superordinated unit does not accept as a valid identifier the identifier KF1 transmitted during preceding requests.

2. A method according to claim 1, **characterised in that** the field device F1 is used as a successor device to a field device F0 having the identifier KF0, which is used as the alternative identifier AKF1 in the field device F1, and the field device F1 is a field device type similar to the field device F0 and having substantially the same functionalities.

3. A method according to either one of the preceding claims, **characterised in that** the bus system is a Profibus-DP or a Profibus-PA and the identifier is a Profibus Ident No.

4. A method according to any one of the preceding claims, **characterised in that** the superordinated unit is an SPC controller which functions as a Master Class 1 device and communicates via MSCY_C1 (Master-Slave Class 1 cyclic) services with the field device F1 functioning as a slave.

5. A method according to any one of the preceding claims, **characterised in that** the superordinated unit with the SetSlaveAdd or SetParam service offers a Profibus Ident No. to the field device F1 functioning as a slave.

6. A method according to any one of the preceding claims, **characterised in that** the superordinated unit with the GetSlaveDiag service requests the field device, functioning as a slave, *inter alia* to send back its Ident No.

7. A method according to any one of the preceding claims, **characterised in that** automatic adaptation of the identifier is possible only in the initialisation phase of the bus communication of the field device.

8. A method according to any one of the preceding claims, **characterised in that** modification of the identifier is possible only in the "waiting for parameterisation" (Wait Param) state.

9. A method according to any one of the preceding claims, **characterised in that** the modification of the identifier is in compliance with the Profibus specifications.

10. A method of replacing automation-engineering field devices which are connected via a field bus to a superordinated unit, wherein an existing first field device, which is integrated into a control program of the superordinated unit, is replaced by a new, second field device, **characterised in that** the new, second field device operates according to the method described in the preceding claims.

## Revendications

1. Procédé destiné à l'exploitation d'un appareil de terrain de la technique d'automatisation, lequel est relié par l'intermédiaire d'un système de bus à une unité maître, et qui présente un code d'identification identifiant le type de l'appareil de terrain, **caractérisé en ce qu'**outre un code d'identification KF1, au moins un code d'identification alternatif AKF1, qui identifie un type d'appareil de terrain similaire, est enregistré dans l'appareil de terrain F1 et que ce code d'identification alternatif AKF1 est transmis sur demande à l'unité maître lorsque cette dernière n'accepte pas comme code d'identification valable le code d'identification KF1 transmis lors de demandes précédentes.

2. Procédé selon la revendication 1, **caractérisé en ce que** l'appareil de terrain F1 est utilisé en tant que nouvel appareil succédant à l'ancien appareil de terrain F0, qui possède le code d'identification KF0, lequel est utilisé en tant que code d'identification alternatif AKF1 dans l'appareil de terrain F1, et **en ce que** l'appareil de terrain F1 et de type similaire à l'appareil de terrain F0, avec pour l'essentiel les mêmes fonctionnalités.

3. Procédé selon l'une des revendications précédentes, **caractérisé en ce que** le système de bus est un Profibus DP ou un Profibus PA, et **en ce que** le code d'identification est un n° d'identification Profibus.

4. Procédé selon l'une des revendications précédentes, **caractérisé en ce que** l'unité maître est un automate SPS, qui agit en tant que maître de classe 1 et communique par l'intermédiaire des services MSCY_C1 (maître-esclave classe 1 cyclique) avec un appareil de terrain F1 agissant en tant qu'esclave.

5. Procédé selon l'une des revendications précédentes, **caractérisé en ce que** l'unité maître propose à l'appareil de terrain F1 agissant en tant qu'esclave un n° d'identification Profibus avec le service SetSlaveAddr ou SetParam.

6. Procédé selon l'une des revendications précédentes, **caractérisé en ce que** l'unité maître invite, par l'intermédiaire du service GetSlaveDiag, l'appareil de terrain agissant en tant qu'esclave à renvoyer, entre autres, son n° d'identification.

7. Procédé selon l'une des revendications précédentes, **caractérisé en ce qu'**une adaptation automatique du code d'identification n'est possible que pendant la phase d'initialisation de la communication de bus de l'appareil de terrain.

8. Procédé selon l'une des revendications précédentes, **caractérisé en ce qu'**une modification du code d'identification n'est possible que dans l'état "Attente de paramétrage" ("Wait Param").

9. Procédé selon l'une des revendications précédentes, **caractérisé en ce que** la modification du code d'identification est conforme aux spécifications Profibus.

10. Procédé destiné au remplacement d'appareils de terrain de la technique d'automatisation, qui sont reliés par l'intermédiaire d'un bus de terrain à une unité maître, pour lequel un première appareil de terrain présent, lequel est intégré dans le programme de commande de l'unité maître, est remplacé par un deuxième appareil de terrain neuf, **caractérisé en ce que** le deuxième appareil de terrain neuf fonctionne d'après le procédé décrit dans les revendications précédentes.
